(19) Europäisches Patentamt
European Patent Office
Office européen des brevets

(11) **EP 3 144 608 B1**

(12) **EUROPEAN PATENT SPECIFICATION**

(45) Date of publication and mention
of the grant of the patent:
**03.04.2019 Bulletin 2019/14**

(51) Int Cl.:
*F25B 43/02* *(2006.01)*      *F25B 31/00* *(2006.01)*
*B01D 17/02* *(2006.01)*

(21) Application number: **15793604.8**

(22) Date of filing: **21.04.2015**

(86) International application number:
**PCT/JP2015/002170**

(87) International publication number:
**WO 2015/174022 (19.11.2015 Gazette 2015/46)**

(54) **OIL SEPARATION DEVICE**

ÖLABSCHEIDEVORRICHTUNG

DISPOSITIF DE SÉPARATION D'HUILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2014 JP 2014099687**

(43) Date of publication of application:
**22.03.2017 Bulletin 2017/12**

(73) Proprietor: **Daikin Industries, Ltd.
Osaka-shi, Osaka 530-8323 (JP)**

(72) Inventor: **SHIMASAKI, Kazuki
Osaka 530-8323 (JP)**

(74) Representative: **Goddar, Heinz J. et al
Boehmert & Boehmert
Anwaltspartnerschaft mbB
Pettenkoferstrasse 22
80336 München (DE)**

(56) References cited:
**EP-A1- 2 413 067          WO-A1-2013/058595
JP-A- 2011 202 876      JP-A- 2011 247 575
JP-B1- S 472 949          KR-A- 20130 043 977
US-A- 4 906 264          US-A1- 2006 280 622
US-A1- 2006 280 622**

**Description**

TECHNICAL FIELD

The present invention relates to an oil separator.

BACKGROUND ART

A refrigerant circuit of an air conditioner is provided with an oil separator separating a refrigerant and refrigeration oil, which serves as lubricating oil of a compressor, from each other.

The oil separator mainly includes a container body, an injection pipe, a refrigerant discharge pipe, and an oil discharge pipe. The container body is a cylindrically-shaped, hollow container extending vertically. The injection pipe is inserted into the container body from a sidewall of the container body to introduce a liquid mixture of the refrigerant and the refrigeration oil into the container body. The refrigerant discharge pipe is inserted into the container body from the upper end of the container body to discharge the separated refrigerant from the container body (specifically, toward a side adjacent to an inlet of a condenser). The oil discharge pipe communicates with the interior of the container body at the lower end of the container body to discharge the separated refrigeration oil from the container body (specifically, toward a side adjacent to a suction port of the compressor).

Patent Document 1 discloses an example of such an oil separator including an injection pipe having a portion exposed from a container body and bent along a sidewall of the container body. This configuration improves efficiency of an oil separator in separating a refrigerant and refrigeration oil from each other under the action of centrifugal force.

Patent Document 2 discloses another oil separator. The oil separator in Patent Document 2 includes a refrigerant discharge pipe disposed on the central axis of a container body, and an injection pipe having a bend which is bent inside the container body such that the outer portion of the bend is closer to the central axis of the container body than the inner portion of the bend is.

US 2006/280622 A1 discloses an oil separator according to the preamble of claim 1.

CITATION LIST

PATENT DOCUMENT

PATENT DOCUMENT 1: Japanese Unexamined Patent Publication No. 2002-61993

PATENT DOCUMENT 2: Japanese Unexamined Patent Publication No. 2005-69654

SUMMARY OF THE INVENTION

TECHNICAL PROBLEM

In the oil separator in Patent Document 1, the injection pipe extends along a tangential direction of the circular transverse cross-section of the container body and is inserted into the container body. In this case, it is necessary to form a hole into which the injection pipe is inserted near a point on the circumference of a circle on which a tangent runs (i.e., a contact point) such that the injection pipe extends along the tangential direction. The container body is unfortunately made of a material difficult to be processed. Thus, it is quite difficult to make such a hole in the container body, resulting in a decrease in efficiency in producing the oil separator.

In the oil separator in Patent Document 2, the bend of the injection pipe is disposed such that the outer portion of the bend is closer to the refrigerant discharge pipe when the container body is viewed from above. The refrigeration oil that has been separated from the refrigerant at the bend is discharged at a position near the central axis of the container body at a decreased velocity. As a result, the oil tends to be sucked into the refrigerant discharge pipe.

In view of the foregoing background, it is therefore an object of the present invention to provide a technique for reducing a decrease in efficiency in producing an oil separator while maintaining high separation efficiency in separating a refrigerant and refrigeration oil from each other.

SOLUTION TO THE PROBLEM

This problem is solved by an oil separator according to claim 1.

This configuration allows a centrifugal force to act on the liquid mixture flowing through the injection pipe (23) at the bend (25). Having a higher specific gravity than the refrigerant, the refrigeration oil is sent toward the outer portion (26) of the bend (25), i.e., toward the sidewall (21a) of the container body (21). That is to say, the flow of the refrigeration oil is separated from that of the refrigerant. In the separated refrigeration oil, oil particles adhere to one another which leads to an increased oil mass per particle. As a result, the refrigeration oil flows into the container body (21) at a decreased velocity, and runs down the sidewall (21a) of the container body (21). On the other hand, the refrigerant flows into the container body (21) at a higher velocity than the refrigeration oil. Accordingly, the refrigerant and the refrigeration oil are reliably separated from each other inside the container body (21).

In particular, the above configuration achieves high separation efficiency, and thus, the injection pipe (23) does not have to be bent outside the container body (21). Therefore, the position of the insertion port (22a) may be freely determined, unlike the case where the insertion port (22a) needs to be formed in the sidewall (21a) such that the injection pipe (23) is inserted and extends in a tangential direction near a contact point. This thus makes it easier to form the insertion port (22a) in the container body (21) to improve the efficiency in producing the oil separator (20).

When viewed from the insertion port (22a), the bend (25) is located behind the extension (24) inside the container body (21). Therefore, a liquid mixture comes to flow into the bend (25) after its velocity has been increased in the extension (24). Accordingly, in comparison to the case where no extension (24) is provided, a higher centrifugal force acts on the mixture , so that the refrigeration oil tends to be sent toward the outer portion (26) of the bend (25).

Satisfying the above expression allows the refrigeration oil to reliably adhere to the inner wall of the injection pipe (23). The refrigeration oil adhering to the inner wall may run down the inner wall without departing from the inner wall to reliably flow out of the injection pipe (23).

In this configuration, the portion of the injection pipe (23) between the bend (25) and the outlet end (23a) is longer, thus allowing the refrigerant to keep its flow velocity while flowing into the container body (21). As a result, a swirl component may be provided to achieve highly efficient centrifugation.

According to a special embodiment a shortest distance (L1) between the outlet end (23a) of the injection pipe (23) and the sidewall (21a) of the container body (21) is shorter than a shortest distance (L2) between the outer portion (26) of the bend (25) and the sidewall (21a) of the container body (21).

The outlet end (23a) of the injection pipe (23) is disposed relatively close to the sidewall (21a). As a result, the injection pipe (23) may introduce the refrigerant and the refrigeration oil to the vicinity of the sidewall (21a) to improve the separation efficiency. Also, the refrigerant and the refrigeration oil flowing through the injection pipe (23) may be allowed to flow out smoothly and as closely as possible along the sidewall (21a) of the container body (21).

According to a further special embodiment a curvature radius of the bend (25) is smaller than that of the sidewall (21a) of the container body (21).

This increases the centrifugal force acting on the liquid mixture so that the refrigeration oil in the bend (25) tends to be sent toward the outer portion (26). Accordingly, this configuration improves the efficiency of the oil separator in separating the refrigerant and the refrigeration oil from each other.

According to a further special embodiment the injection pipe (23) is further bent upward inside the container body (21).

Here, the refrigeration oil having a higher specific gravity than the refrigerant hardly moves upward inside the injection pipe (23). This increases the efficiency of the oil separator in separating the refrigerant and the refrigeration oil from each other.

According to a further special embodiment an end face of the outlet end (23a) of the injection pipe (23) is inclined toward an interior of the container body (21).

As a result, the injection pipe (23) may introduce the refrigerant and the refrigeration oil to the vicinity of the sidewall (21a) to improve separation efficiency. Also, the refrigerant and the refrigeration oil flowing through the injection pipe (23) may be allowed to flow out smoothly and as closely as possible along the sidewall (21a) of the container body (21).

## ADVANTAGES OF THE INVENTION

The invention allows to reliably separate a refrigerant and a refrigeration oil from each other, and to improve the productivity of the oil separator (20).

The invention allows a higher centrifugal force to act on the liquid mixture than that in the case where no extension (24) is provided, so that the refrigeration oil tends to be sent toward the outer portion (26) of the bend (25).

The invention allows the refrigeration oil to reliably adhere to the inner wall of the injection pipe (23), and to run down the inner wall to reliably flow out of the injection pipe (23).

In the invention, a swirl component may be induced to achieve a highly efficient centrifugation.

Also, the special embodiments may improve separation efficiency and may allow the refrigerant and the refrigeration oil flowing through the injection pipe (23) to flow out smoothly and as closely as possible along the sidewall (21a).

The further special embodiments may improve the efficiency of the oil separator in separating the refrigerant and the refrigeration oil from each other.

## BRIEF DESCRIPTION OF THE DRAWINGS

FIG. 1 is a piping system diagram of a refrigerant circuit including an oil separator according to a first embodiment.
FIG. 2 illustrates a configuration of the oil separator according to the first embodiment using a partial configuration of a container body.
FIG. 3 is a horizontal cross-sectional view of the oil separator according to the first embodiment.
FIG. 4 is a partially enlarged view of an injection pipe of FIG. 3 including a bend.
FIG. 5 is a horizontal cross-sectional view of an oil separator according to a second embodiment.
FIG. 6 illustrates a configuration of an oil separator according to another embodiment using a partial configuration of a container body.

DESCRIPTION OF EMBODIMENTS

Embodiments of the present invention will now be described in detail with reference to the drawings. The following embodiments are merely preferred examples in nature, and are not intended to limit the scope, applications, or use of the invention as defined in the claims.

<<First Embodiment>>

<Configuration of Refrigerant Circuit>

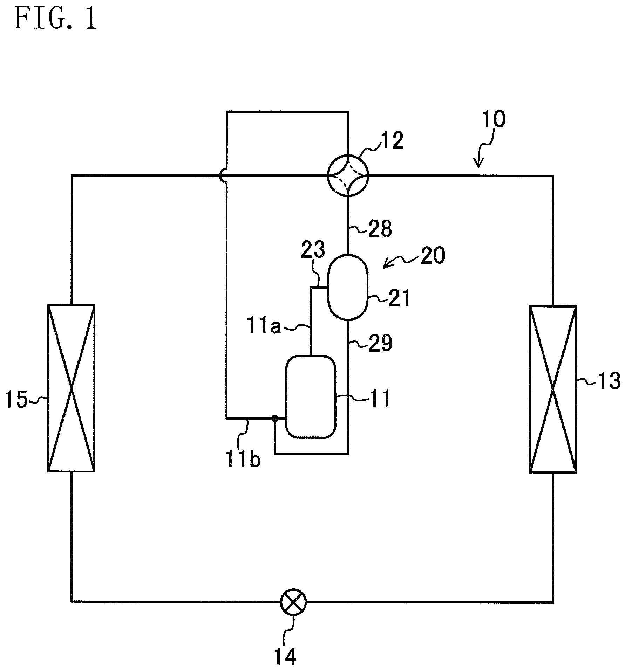

A refrigerant circuit (10) of FIG. 1 is installed in an air conditioner which can cool and heat an air-conditioned space. The refrigerant circuit (10) is a vapor compression refrigeration circuit, and is configured by sequentially connecting, via a refrigerant pipe, a compressor (11), an oil separator (20), a four-way valve (12), a heat source-side heat exchanger (13), an expansion valve (14), and a utilization-side heat exchanger (15).

A compressor (11) is configured as a scroll-type compressor, for example. The compressor (11) is connected to a discharge pipe (11a) through which the refrigerant discharged from the compressor (11) flows, and a suction pipe (11b) through which the refrigerant to be sucked into the compressor flows. The discharge pipe (11a) and the suction pipe (11b) form the refrigerant pipe. Examples of lubricating oil, i.e., the refrigeration oil, circulating through respective sliding portions in the compressor (11) include polyalkylene glycol (PAG).

The oil separator (20) is connected to the discharge pipe (11a), the suction pipe (11b), and the four-way valve (12). The refrigerant discharged from the compressor (11) is, more specifically, a liquid mixture of the refrigeration oil and the refrigerant. The oil separator (20) separates the liquid mixture into the refrigeration oil and the oil-free refrigerant, and returns the refrigeration oil to the suction pipe (11b). The configuration of the oil separator (20) will be described in detail later.

The four-way valve (12) switches the flow direction of the refrigerant in the refrigerant circuit (10). When the refrigerant circuit (10) performs a cooling cycle, the four-way valve (12) connects a discharge side of the compressor (11) to the heat source-side heat exchanger (13) and, at the same time, connects a suction side of the compressor (11) to the utilization-side heat exchanger (15) (a state illustrated by the continuous line of FIG. 1). When the refrigerant circuit (10) performs a heating cycle, the four-way valve (12) connects a discharge side of the compressor (11) to the utilization-side heat exchanger (15), and at the same time, connects a suction side of the compressor (11) to the heat source-side heat exchanger (13) (a state illustrated by the dotted lines of FIG. 1).

The heat source-side heat exchanger (13) is configured as, e.g., a fin-and-tube heat exchanger, and performs heat exchange between a refrigerant flowing through a heat exchanger tube and air outside an air-conditioned space.

The expansion valve (14) is configured as, e.g., an electronic expansion valve, and depressurizes the refrigerant.

The utilization-side heat exchanger (15) is configured as, e.g., a fin-and-tube heat exchanger, and performs heat exchange between a refrigerant flowing through a heat exchanger tube and air inside the air-conditioned space.

<Configuration of Oil Separator>

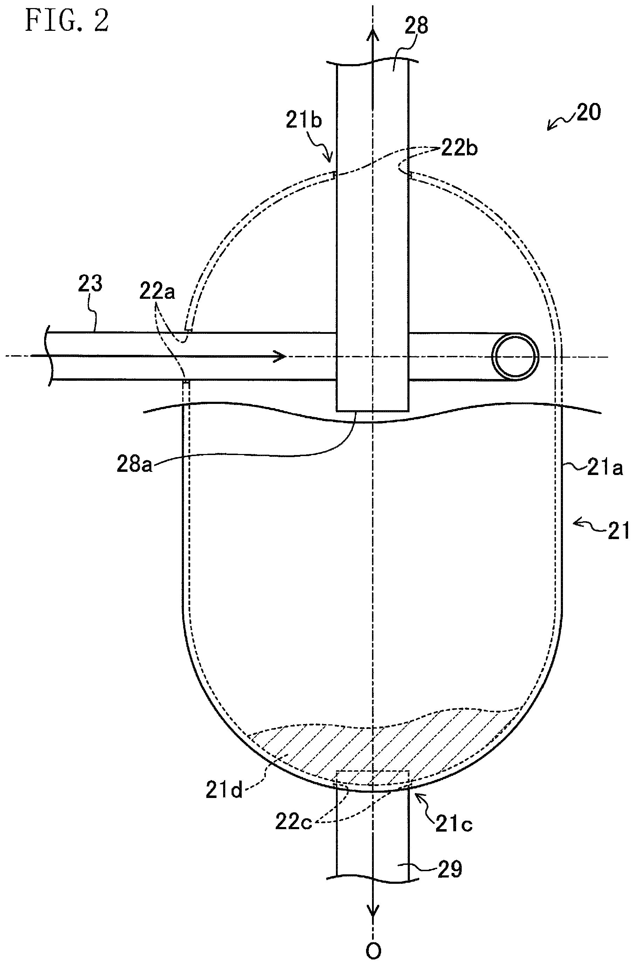

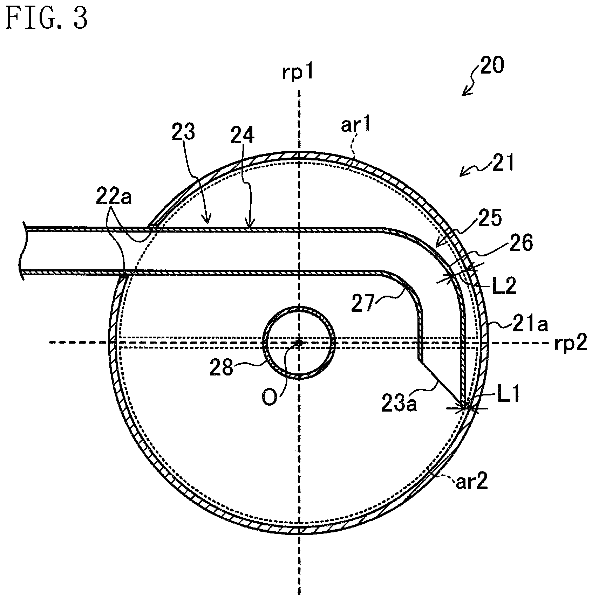

The oil separator (20) according to the first embodiment is a so-called cyclone-type (centrifugal-type) device separating the refrigerant and the refrigeration oil from each other under the action of centrifugal force. The oil separator (20) includes a container body (21), an injection pipe (23), a refrigerant discharge pipe (28), and an oil discharge pipe (29), as illustrated in FIGS. 2 and 3.

As illustrated in FIG. 2, the container body (21) is a closed container of a vertically oriented, hollow cylindrical shape, having an upper end (21b) curved upwardly and a lower end (21c) curved downwardly. The container body (21) is made of, e.g., iron, and the liquid mixture flows in the container body (21). A sidewall (21a) of the container body (21) includes an insertion port (22a) for the injection pipe (23) at a position adjacent to an upper end (21b) of the sidewall (21a), and a connection port (22b) for the refrigerant discharge pipe (28) at the upper end (21b) of the container body (21). A bottom of the container body (21) serves as an oil reservoir (21d) in which the refrigeration oil that has been separated accumulates, and the lower end (21c) of the container body (21) is provided with a connection port (22c) for the oil discharge pipe (29).

The injection pipe (23) has an inlet end connected to the discharge pipe (11a) of FIG. 1, and an outlet end (23a) disposed inside the container body (21) as illustrated in FIG. 3. That is to say, the injection pipe (23) is inserted into the container body (21) from the insertion port (22a) to allow a portion of the injection pipe (23) including the outlet end (23a) to be disposed in the container body (21), and the rest of the injection pipe (23) including the inlet end to be exposed outside the container body (21). The injection pipe (23) introduces the liquid mixture into the container body (21).

In particular, the injection pipe (23) has a portion disposed inside the container body (21). This portion is substantially horizontally disposed as illustrated in FIG. 2, and has an extension (24) and a bend (25) as illustrated in FIG. 3. The extension (24) is a portion extending substantially linearly from the insertion port (22a) to the bend (25). The bend (25) is bent such that the outer portion (26) is closer to the sidewall (21a) of the container body (21) than the inner portion (27) of the bend (25) is when the container body (21) is viewed from above (horizontal cross-sectional view).

Specifically, the bend (25) is disposed opposite to the insertion port (22a) with respect to a first reference plane (rp1) including the central axis (O) of the container body (21) and substantially orthogonal to the extension (24). The outlet end (23a) of the injection pipe (23) disposed downstream of the bend (25) in the flow direction of the liquid mixture is disposed in a second region (ar2) located opposite to a region (arl), which is inside the container body (21) and includes the extension (24), with respect to a second reference plane (rp2) including the central axis (O) of the container body (21) and substantially parallel to the extension (24). The bend (25) is disposed in the first region (ar1).

More specifically, each of the first and second regions (ar1, ar2) is divided into two regions by the first reference plane (rp1) in the horizontal direction of FIG. 3. Thus, the insertion port (22a) is disposed on the left side of the first region (ar1) with respect to the first reference plane (rp1), whereas the bend (25) is disposed on the right side of the first region (ar1) with respect to the first reference plane (rp1). The outlet end (23a) is disposed on the right side of the second region (ar2) with respect to the first reference plane (rp1). This allows the liquid mixture flowing through the injection pipe (23) to sequentially flow, from the insertion port (22a), through the left side of the first region (arl), the right side of the first region (arl), and the right side of the second region (ar2), to be discharged into the container body (21) from the outlet end (23a).

At that time, the refrigerant and the refrigeration oil which are included in the liquid mixture and whose flow velocities have been increased at the extension (24) are introduced into the bend (25), and are subjected to centrifugal force at the bent (25). The outer portion (26) of the bend (25) is closer to the sidewall (21a) of the container body (21) than the inner portion (27) of the bend (25) is. Thus, the refrigeration oil having a higher specific gravity than the refrigerant is sent toward the outer portion (26) (i.e., toward the sidewall (21a) of the container body (21)) under the action of the centrifugal force. At the bend (25), the flow of the refrigeration oil is then separated from that of the refrigerant. The refrigerant, maintaining its increased velocity, energetically flows from the outlet end (23a) into the container body (21). On the other hand, the refrigeration oil is sent toward the outer portion (26) at the bend (25) whereby its velocity decreases. In this condition, the refrigeration oil flows into the container body (21) from the outlet end (23a). That is to say, at the bend (25), the refrigerant and the refrigeration oil are separated from each other to some extent.

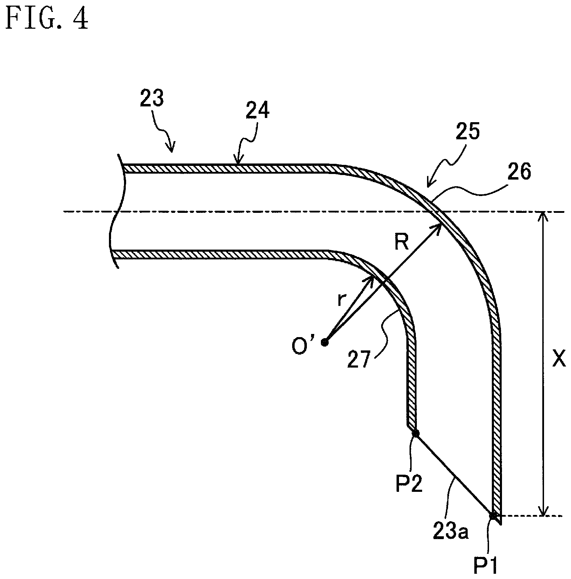

Also, supposing that, as illustrated in FIG. 4, a distance obtained by linking the center of the inner diameter of the extension (24) of the injection pipe (23) to the outlet end (23a) by a straight line is a distance X, and the curvature radius of the inner portion (27) of the bend (25) is r, the distance X lies within a range determined by the following expression (1):

$$2.5 \times r \leq X \leq 3.5 \times r$$

In order to satisfy the above expression (1), it is recommended that the diameter of the injection pipe (23) be about 20 mm, and the liquid mixture inside the injection pipe (23) (in particular, the refrigeration oil) have a flow velocity ranging from about 10-20 m/s. The higher the revolution speed of the compressor (11) is, the faster the above flow velocity becomes. Thus, a velocity lower than about 10 m/s (e.g., 2 m/s) means that the revolution speed of the compressor (11) is lower. In this case, no lubricating oil inside the compressor (11) flows into the discharge pipe (11a), and thus, in the first embodiment, the range of the flow velocity is set to be about 10-20 m/s.

In the first embodiment, the curvature radius R of the outer portion (26) of the bend (25) is set to be about 40 mm, and the curvature radius r of the inner portion (27) of the bend (25) is set to be about 20 mm which is almost the same as the diameter of the injection pipe (23). If the curvature radius r is about 20 mm, the range of the distance X by the expression (1) is "about 50-70 mm."

Numerical values of the diameter of the injection pipe (23), the curvature radius r of the inner portion (27) of the bend (25), and the curvature radius R of the outer portion (26) of the bend (25) are respectively set to be "about 20 mm," "about 20 mm," and "about 40 mm" as described above. However, these diameters are mere examples, and do not have to be limited to the set numerical values.

As described above, at the bend (25), the refrigeration oil is sent toward the inner wall of the outer portion (26) under the action of the centrifugal force. However, if the distance X is shorter than "$2.5 \times r$," the refrigeration oil sent toward the inner wall of the outer portion (26) cannot reliably adhere to the inner wall of the outer portion (26), and flows from the injection pipe (23) into the container body (21) without adhering. If the distance X is longer than "$3.5 \times r$" to the contrary, the refrigeration oil can once adhere to the inner wall of the outer portion (26), but then departs nevertheless from the inner wall and flows from the injection pipe (23) into the container body (21). As can be seen, the refrigeration oil that has departed from the inner wall and flowed into the container body (21) may again merge with the refrigerant, resulting in a decreased separation efficiency of the oil separator (20).

In contrast, in the first embodiment, the distance X is determined so as to satisfy the expression (1). The oil separator (20) may maintain its relatively high separation efficiency accordingly.

Also, as illustrated in FIG. 3, the radius of curvature of the bend (25) (more strictly, the curvature radius of the middle portion of the interior of the bend (25)) is smaller than that of the sidewall (21a) of the container body (21) when the container body (21) is viewed from above (horizontal cross-sectional view). This further increases the centrifugal force acting on the liquid mixture at the bend (25), and the refrigeration oil tends toward be sent to the outer portion (26) of the bend (25).

Furthermore, the shortest distance (L1) between the outlet end (23a) of the injection pipe (23) and the sidewall (21a) of the container body (21) is shorter than the shortest distance (L2) between the outer portion (26) of the bend (25) and the sidewall (21a) of the container body (21) (L1 < L2) when the container body (21) is viewed from above (horizontal cross-sectional view). The end face of the outlet end (23a) is cut so as to be inclined toward the interior of the container body (21). That is to say, the outlet of the outlet end (23a) from which the liquid mixture flows out is open to the interior of the container body (21), and not to the exterior of the bend (25). The outlet end (23a) of the injection pipe (23) is disposed relatively close to the sidewall (21a).

The relation "L1 < L2" of the shortest distances and the configuration of the end face of the outlet end (23a) make the distance from the insertion port (22a) formed in the wall of the container body (21) and adjacent to an outer portion of the injection pipe (23) including the outer portion (26), to the outlet end (23a) longer than that in the case where such a distance relation and the configuration of the end face are not adopted. This makes the separation of a refrigerant and a refrigeration oil more efficient. Such a distance relation and such a configuration may allow the refrigerant and the refrigeration oil flowing through the injection pipe (23) to flow out smoothly and as closely as possible along the sidewall (21a) of the container body (21), instead of flowing out at a steep angle relative to the sidewall (21a).

The refrigeration oil that has flowed out from the injection pipe (23) has a lower velocity than the refrigerant. Thus, the refrigeration oil runs down the sidewall (21a) and then, moves toward the bottom of the container body (21). On the other hand, the refrigerant is mainly a gas refrigerant, and flows out from the injection pipe (23) at a higher velocity than the refrigeration oil. Thus, the refrigerant swirls along the sidewall (21a).

Here, the outlet end (23a) is obliquely cut, and thus, if the distance X is the lower limit "2.5 × r," it is recommended that the distance X be defined as a distance from the center of the inner diameter of the extension (24) to an end (PI) of the outlet end (23a) closer to the outer portion (26), as illustrated in FIG. 4. If the distance X is the upper limit "3.5 × r" to the contrary, it is recommended that the distance X be defined as a distance from the center of the inner diameter of the extension (24) to an end (P2) of the outlet end (23a) closer to the inner portion (27) (not illustrated). If the distance X is more than the lower limit "2.5 × r" and less than the upper limit "3.5 × r," the distance X may be a distance from the center of the inner diameter of the extension (24) to the outlet end (23a), and is not limited to the end (PI or P2).

In the first embodiment, the injection pipe (23) having the extension (24) and the bend (25) thereon is inserted through the insertion port (22a) into the container body (21)).

The refrigerant discharge pipe (28) is connected to the interior of the container body (21) via a connection port (22b) at the upper end (21b) of the container body (21) as illustrated in FIG. 2, and is disposed so as to be along the central axis (O) of the container body (21) as illustrated in FIGS. 2 and 3. That is to say, the refrigerant discharge pipe (28) is vertically disposed in the upper portion of the container body (21). As illustrated in FIG. 2, the lower end of the refrigerant discharge pipe (28), the lower end serving as an inlet end (28a), is disposed below the injection pipe (23) in the container body (21), and the outlet end of the refrigerant discharge pipe (28) is connected to the four-way valve (12) as illustrated in FIG. 1. The refrigerant discharge pipe (28) allows the refrigerant (specifically, mainly a gas refrigerant) separated from the refrigeration oil and swirling in the container body (21) to flow out of the container body (21). Having flowed out of the container body (21), the refrigerant is sent via the four-way valve (12) to the heat source-side heat exchanger (13) or the utilization-side heat exchanger (15).

Unless a distance is ensured to some extent between the inlet end (28a) of the refrigerant discharge pipe (28) and the outlet end (23a) of the injection pipe (23) like in the case where the inlet end (28a) of the refrigerant discharge pipe (28) is in the same plane as the injection pipe (23), the refrigerant discharge pipe (28) absorbs the refrigeration oil together with the refrigerant, resulting in a decrease in separation efficiency of the oil separator (20). However, in the first embodiment, as described above, the inlet end (28a) of the refrigerant discharge pipe (28) is disposed below the injection pipe (23), and the refrigerant discharge pipe (28) and the injection pipe (23) seem to cross each other when the container body (21) is viewed from the front. This ensures, to some extent, the distance between the inlet end (28a) of the refrigerant discharge pipe (28) and the outlet end (23a) of the injection pipe (23). Thus, the refrigerant discharge pipe (28) hardly absorbs any refrigeration oil but tends to absorb the separated refrigerant.

The oil discharge pipe (29) is connected to the interior of the container body (21) via the connection port (22c) of the lower end (21c) of the container body (21), as illustrated in FIG. 2. The inlet end of the oil discharge pipe (29) is connected to the connection port (22c), and the outlet end of the oil discharge pipe (29) is connected to the suction pipe (11b) of FIG. 1. The oil discharge pipe (29) allows the refrigeration oil separated from the refrigerant and accumulated in the oil reservoir (21d) to flow out of the container body (21). Having flowed out of the container body (21), the refrigeration oil is returned into the compressor (11) through the suction pipe (11b).

<Advantages>

The injection pipe (23) according to the first embodiment has the bend (25) which is bent inside the container body (21) such that the outer portion (26) of the bend (25) is closer to the sidewall (21a) of the container body (21) than the inner portion (27) of the bend (25) is when the container body (21) is viewed from above (horizontal cross-sectional view). This allows a centrifugal force to act on the liquid mixture of the refrigerant and the refrigeration oil, which flow through the injection pipe (23) at the bend (25). Having a higher specific gravity than the refrigerant, the refrigeration oil is sent toward the outer portion (26) of the bend (25), i.e., toward the sidewall (21a) of the container body (21). That is to say, the flow of the refrigeration oil is separated from that of the refrigerant. In the separated refrigeration oil, oil particles adhere to one another, which leads to an increased oil mass per particle. As a result, the refrigeration oil flows into the container body (21)at a decreased velocity, and runs down the sidewall (21a) of the container body (21) to drop downward. On the other hand, the refrigerant flows into the container body (21) at a higher velocity than the refrigeration oil, and then, flows out of the container body (21). Accordingly, the refrigerant and the refrigeration oil are reliably separated from each other inside the container body (21).

In particular, the above configuration achieves high separation efficiency, and thus, the injection pipe (23) does not have to be bent outside the container body (21). Therefore, the insertion port (22a) may be formed, not in a portion adjacent to an intersection of the sidewall (21a) of the container body (21) and the first reference plane (rp1) as shown in FIG. 3, but in a portion of the sidewall (21a) of the container body (21) closer to the second reference plane (rp2) than to the intersection. That is to say, the position of the insertion port (22a) may be freely determined. This thus makes it easier to form the insertion port (22a) in the container body (21) to improve efficiency in producing the oil separator (20).

The injection pipe (23) of the first embodiment further has the extension (24) extending substantially linearly from the insertion port (22a) to the bend (25). The bend (25) is disposed opposite to the insertion port (22a) with respect to the first reference plane (rp1) of FIG. 3. That is to say, when viewed from the insertion port (22a), the bend (25) is located behind the extension (24) inside the container body (21). As can be seen, the linear extension (24) is disposed closer to the insertion port (22a) than the bend (25) is, and thus, the liquid mixture tends to flow into the bend (25) at a higher velocity. Accordingly, a higher centrifugal force than that in the case where no extension (24) is provided acts on the liquid mixture, and the refrigeration oil tends to be sent toward the outer portion (26) of the bend (25).

Also, in the first embodiment, as illustrated in FIG. 4, the distance X obtained by linking the center of the inner diameter of the extension (24) to the outlet end (23a) of the injection pipe (23) by a straight line is set to be within a range determined by the expression "2.5 × r ≤ X ≤ 3.5 × r" based on the curvature radius of the inner portion (27) of the bend (25). This allows the refrigeration oil to reliably adhere to the inner wall of the injection pipe (23). The refrigeration oil adhering to the inner wall may run down the inner wall without departing from the inner wall to reliably flow into the container body (21).

Further, in the first embodiment, as illustrated in FIG. 3, the bend (25) is bent such that the outlet end (23a) is disposed in the second region (ar2) opposite to the first region (ar1) located inside the container body (21) and including the extension (24), and the bend (25) is disposed in the first region (ar1). This makes the portion of the injection pipe (23) between the bend (25) and the outlet end (23a) longer, thus allowing the refrigerant to keep its flow velocity while flowing into the container body (21). As a result, a swirl component may be provided to achieve highly efficient centrifugation.

Furthermore, in the first embodiment, the shortest distance (L1) between the outlet end (23a) of the injection pipe (23) and the sidewall (21a) of the container body (21) is shorter than the shortest distance (L2) between the outer portion (26) of the bend (25) and the sidewall (21a) of the container body (21). That is to say, the outlet end (23a) of the injection pipe (23) is disposed relatively close to the sidewall (21a). Also, in the first embodiment, the end face of the outlet end (23a) of the injection pipe (23) is cut so as to be inclined toward the interior of the container body (21). As a result, the portion of the injection pipe (23) between the insertion port (22a) and the outlet end (23a) is longer than that in the case where such a distance relation and the configuration of the end face are not adopted. The injection pipe (23) may introduce the refrigerant and the refrigeration oil to the vicinity of the sidewall (21a). This thus improves the efficiency of the oil separator (20) in separating the refrigerant and the refrigeration oil from each other. The refrigerant and the refrigeration oil flowing through the injection pipe (23) may be allowed to flow out smoothly and as closely as possible along the sidewall (21a) of the container body (21), instead of flowing out at a steep angle relative to the sidewall (21a).

Moreover, in the first embodiment, the curvature radius of the bend (25) is smaller than that of the sidewall (21a) of the container body (21). This increases the centrifugal force acting on the liquid mixture, and the refrigeration oil at the bend (25) tends to be sent toward the outer portion (26). Accordingly, this improves the efficiency of the oil separator (20) in separating the refrigerant and the refrigeration oil from each other.

<<Second Embodiment>>

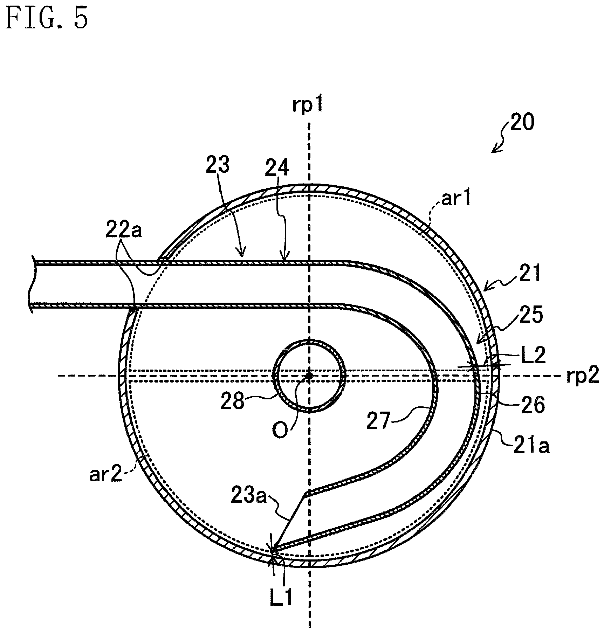

In a second embodiment, as illustrated in FIG. 5, an example will be described in which the bend (25) of the injection pipe (23) has a different shape from that of the first embodiment illustrated in FIG. 3. Note that the configuration of the oil separator (20) of the second embodiment other than the bend (25) are the same as those of the first embodiment.

As illustrated in FIG. 5, the injection pipe (23) has an extension (24) extending substantially linearly from the insertion port (22a) in the sidewall (21a) of the container body (21) and a bend (25) bent from the extension (24) to the outlet end (23a). The bend (25) is bent such that the outer portion (26) is closer to the sidewall (21a) of the container body (21) than the inner portion (27) is. The bend (25) is disposed opposite to the insertion port (22a) with respect to a first reference plane (rp1) including the central axis (O) of the container body (21) and substantially orthogonal to the extension (24). The outlet end (23a) of the injection pipe (23) is disposed in a second region (ar2) opposite to a first region (ar1), which is inside the container body (21) and includes the extension (24), with respect to a second reference plane (rp2) including the central axis (O) of the container body (21) and substantially parallel to the extension (24).

In particular, as illustrated in FIG. 5, the bend (25) of the second embodiment is disposed in the right side of the first region (ar1) with respect to the first reference plane (rp1) and the right and left sides of the second region (ar2) with respect to the first reference plane (rp1) when the container body (21) is viewed from above (horizontal cross-sectional view). Thus, the bend (25) of the second embodiment is not only disposed in the same region (ar1) as the extension (24), but is disposed to extend over a wider area inside the container body (21) than that in the first embodiment.

In such a bend (25), the liquid mixture is subjected to centrifugal force for a longer time than that in the first embodiment, and the refrigeration oil included in the liquid mixture tends to be even easier sent toward the outer portion (26) of bend (25) than the refrigeration oil in the first embodiment. Therefore, the oil separator (20) of the second embodiment has separation efficiency superior to the first embodiment.

As in the first embodiment, the injection pipe (23) is substantially horizontally disposed. The curvature radius of the bend (25) is smaller than that of the sidewall (21a) of the container body (21), and the shortest distance (L1) between the outlet end (23a) of the injection pipe (23) and the sidewall (21a) of the container body (21) is shorter than the shortest distance (L2) between the surface of the outer portion (26) of the bend (25) and the sidewall (21a) of the container body (21). The end face of the outlet end (23a) of the bend (25) is cut so as to be inclined toward the interior of the container body (21).

<<Other Embodiments>>

The first and second embodiments may be modified in the following manner.

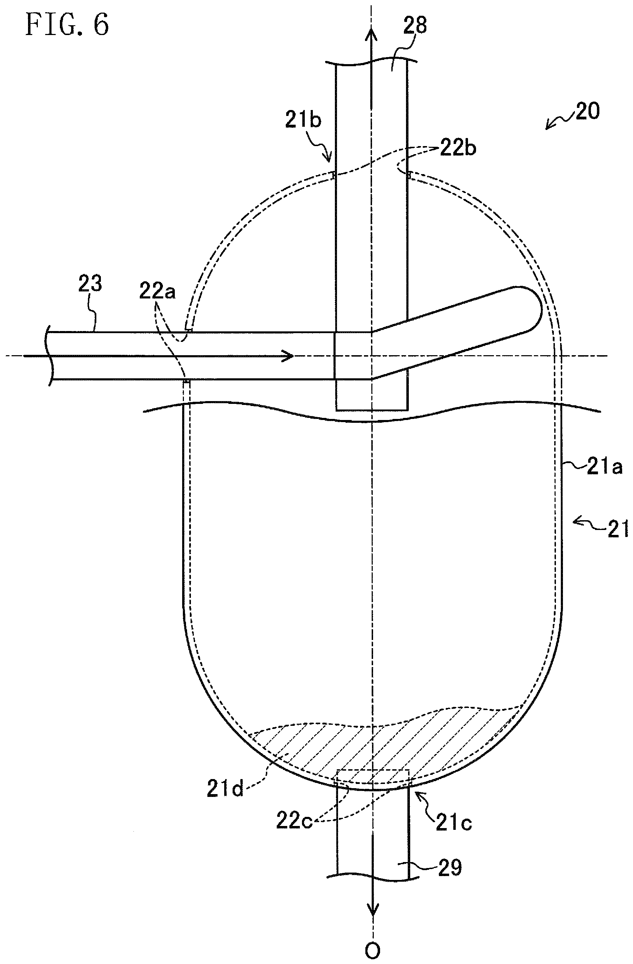

As illustrated in FIG. 6, the injection pipe (23) may be bent further upward inside the container body (21). FIG. 6 shows a case where a portion of the injection pipe (23) around the bend (25) is disposed above a portion around the insertion port (22a). As a result, having a higher specific gravity than the refrigerant, the refrigeration oil hardly moves upward inside the injection pipe (23). This further improves the efficiency of the oil separator (20) in separating the refrigerant and the refrigeration oil from each other.

The bend (25) is an essential component. The extension (24), however, does not have to be provided if the flow velocity of the liquid mixture before the liquid mixture flows into the container body (21) is, e.g., significantly higher than that within the range determined by the expression (1).

The position of the outlet end (23a) of the injection pipe (23) does not have to be limited to those in FIGS. 3 and 5.

As long as the refrigerant and the refrigeration oil are sufficiently separated from each other in the bend (25), the bend (25) does not need to be configured to have a smaller curvature radius than the sidewall (21a) of the container body (21).

The configuration in which the shortest distance (L1) between the outlet end (23a) and the sidewall (21a) is shorter than the shortest distance (L2) between the outer portion (26) of the bend (25) and the sidewall (21a) and the configuration in which the end face of the outlet end (23a) is obliquely cut toward the interior of the container body (21) do not have to be adopted. Either one of the configurations may be adopted, or neither may be adopted.

Further, the injection pipe (23) may be also bent outside the container body (21).

Moreover, the bend (25) of the injection pipe (23) may be bent to form a right angle.

INDUSTRIAL APPLICABILITY

As can be seen from the foregoing description, the present invention is useful as a centrifugal oil separator.

DESCRIPTION OF REFERENCE CHARACTERS

| | |
|---|---|
| 21 | Container Body |
| 21a | Sidewall |
| 22a | Insertion Port |
| 23 | Injection Pipe |
| 23a | Outlet End |
| 24 | Extension |
| 25 | Bend |
| 26 | Outer Portion |
| 27 | Inner Portion |
| rp1 | First Reference Plane |
| rp2 | Second Reference Plane |
| L1, L2 | Shortest Distance |
| ar1 | First Region |
| ar2 | Second Region |

## Claims

1. An oil separator comprising:

   a cylindrical container body (21) into which a liquid mixture of a refrigerant and a refrigeration oil flows;
   an injection pipe (23) inserted into the container body (21) from an insertion port (22a) formed in a sidewall (21a) of the container body (21), and introducing the liquid mixture into the container body (21); and
   a refrigerant discharge pipe (28) vertically disposed in an upper portion of the container body (21), allowing the refrigerant of the liquid mixture to flow out of the container body (21), and having a lower end which serves as an inlet end (28a) of the refrigerant and which is disposed below the injection pipe (23), wherein
   the injection pipe (23) has a bend (25) disposed inside the container body (21) and bent such that an outer portion (26) of the bend (25) is closer to the sidewall (21a) of the container body (21) than an inner portion (27) of the bend (25) is when the container body (21) is viewed from above,
   wherein
   the injection pipe (23) further includes an extension (24) extending substantially linearly from the insertion port (22a) to the bend (25) inside the container body (21), and
   the bend (25) is disposed opposite to the insertion port (22a) with respect to a first reference plane (rp1) including a central axis (O) of the container body (21) and substantially orthogonal to the extension (24) and
   **characterized in that**
   a distance X defined by a length of a straight line connecting a center of the inner diameter of the extension (24) to an outlet end (23a) of the injection pipe (23) is determined so as to satisfy the following expression based on a curvature radius r of the inner portion (27) of the bend (25):

$$2.5 \times r \leq X \leq 3.5 \times r,$$

   and
   the outlet end (23a) of the injection pipe (23) is disposed in a region (ar2) opposite to a region (ar1), which is inside the container body (21) and includes the extension (24), with respect to a second reference plane (rp2) including the central axis (O) of the container body (21) and substantially parallel to the extension (24).

2. The oil separator of claim 1, wherein

a shortest distance (L1) between the outlet end (23a) of the injection pipe (23) and the sidewall (21a) of the container body (21) is shorter than a shortest distance (L2) between the outer portion (26) of the bend (25) and the sidewall (21a) of the container body (21).

3. The oil separator of any one of claims 1-2, wherein a curvature radius of the bend (25) is smaller than that of the sidewall (21a) of the container body (21).

4. The oil separator of any one of claims 1-3, wherein the injection pipe (23) is further bent upward inside the container body (21).

5. The oil separator of any one of claims 1-4, wherein an end face of the outlet end (23a) of the injection pipe (23) is inclined toward an interior of the container body (21).

## Patentansprüche

1. Ölabscheidevorrichtung, umfassend:

   einen zylindrischen Behälterkörper (21), in den eine flüssige Mischung aus einem Kältemittel und einem Kältemittelöl fließt;
   ein Injektionsrohr (23), das von einer in einer Seitenwand (21a) des Behälterkörpers (21) ausgebildeten Einsetzöffnung (22a) in den Behälterkörper (21) eingesetzt ist und die flüssige Mischung in den Behälterkörper (21) einleitet; und
   ein Kältemittelablassrohr (28), das in einem oberen Abschnitt des Behälterkörpers (21) vertikal angeordnet ist, ermöglicht, dass das Kältemittel der flüssigen Mischung aus dem Behälterkörper (21) herausfließt, und ein unteres Ende aufweist, das als ein Einlassende (28a) des Kältemittels dient und unter dem Injektionsrohr (23) angeordnet ist, wobei
   das Injektionsrohr (23) eine Biegung (25) aufweist, die innerhalb des Behälterkörpers (21) angeordnet ist und so gebogen ist, dass ein äußerer Abschnitt (26) der Biegung (25) näher an der Seitenwand (21a) des Behälterkörpers (21) als ein innerer Abschnitt (27) der Biegung (25) bei Betrachtung des Behälterkörpers (21) von oben ist, wobei das Injektionsrohr (23) ferner eine Verlängerung (24) enthält, die sich im Wesentlichen linear von der Einsetzöffnung (22a) zur Biegung (25) innerhalb des Behälterkörpers (21) erstreckt, und
   die Biegung (25) gegenüber der Einsetzöffnung (22a) in Bezug auf eine erste Referenzebene (rp1) angeordnet ist, die eine zentrale Achse (O) des Behälterkörpers (21) enthält und im Wesentlichen orthogonal zur Verlängerung (24) verläuft,

**dadurch gekennzeichnet, dass** eine Distanz X, die durch eine Länge einer geraden Linie definiert ist, die eine Mitte des inneren Durchmessers der Verlängerung (24) mit einem Auslassende (23a) des Injektionsrohres (23) verbindet, so bestimmt ist, dass sie den folgenden Ausdruck basierend auf einem Krümmungsradius r des inneren Abschnitts (27) der Biegung (25) erfüllt:

$$2{,}5 \; \mathrm{x} \; \mathrm{r} \leq \mathrm{X} \leq 3{,}5 \; \mathrm{x} \; \mathrm{r},$$

und

das Auslassende (23a) des Injektionsrohres (23) in einer Region (ar2) gegenüber einer Region (an), die sich innerhalb des Behälterkörpers (21) befindet und die Verlängerung (24) enthält, in Bezug auf eine zweite Referenzebene (rp2), die die zentrale Achse (O) des Behälterkörpers (21) enthält und im Wesentlichen parallel zur Verlängerung (24) verläuft, angeordnet ist.

2. Ölabscheidevorrichtung nach Anspruch 1, wobei eine kürzeste Distanz (L1) zwischen dem Auslassende (23a) des Injektionsrohres (23) und der Seitenwand (21a) des Behälterkörpers (21) kürzer als eine kürzeste Distanz (L2) zwischen dem äußeren Abschnitt (26) der Biegung (25) und der Seitenwand (21a) des Behälterkörpers (21) ist.

3. Ölabscheidevorrichtung nach einem der Ansprüche 1-2, wobei ein Krümmungsradius der Biegung (25) kleiner als derjenige der Seitenwand (21a) des Behälterkörpers (21) ist.

4. Ölabscheidevorrichtung nach einem der Ansprüche 1-3, wobei das Injektionsrohr (23) ferner nach oben innerhalb des Behälterkörpers (21) gebogen ist.

5. Ölabscheidevorrichtung nach einem der Ansprüche 1-4, wobei eine Stirnseite des Auslassendes (23a) des Injektionsrohres (23) in Richtung zu einem Inneren des Behälterkörpers (21) geneigt ist.

**Revendications**

1. Séparateur d'huile comprenant :

un corps de contenant cylindrique (21) dans lequel s'écoule un mélange liquide d'un frigorigène et d'une huile de réfrigération ;
une conduite d'injection (23) insérée dans le corps de contenant (21) à partir d'un port d'insertion (22a) formé dans une paroi latérale (21a) du corps de contenant (21), et introduisant le mélange liquide dans le corps de contenant (21) ; et
une conduite de décharge de frigorigène (28) disposée verticalement dans une portion supérieure du corps de contenant (21), permettant au frigorigène du mélange liquide de s'écouler hors du corps de contenant (21), et possédant une extrémité inférieure qui sert d'extrémité admission (28a) du frigorigène et qui est disposée en dessous de la conduite d'injection (23), dans lequel
la conduite d'injection (23) a un coude (25) disposé au sein du corps de contenant (21) et fléchi de telle sorte qu'une portion externe (26) du coude (25) est plus proche de la paroi latérale (21a) du corps de contenant (21) qu'une portion interne (27) du coude (25) se présente lorsqu'on regarde le corps de contenant (21) à partir du dessus,
dans lequel
la conduite d'injection (23) inclut en outre une extension (24) laquelle s'étend substantiellement dans un plan linéaire à partir du port d'insertion (22a) jusqu'au coude (25) au sein du corps de contenant (21), et
le coude (25) est disposé à l'opposé du port d'insertion (22a) par rapport à un premier plan de référence (rp1) incluant un axe central (O) du corps de contenant (21) et substantiellement orthogonal à l'extension (24) et
**caractérisé en ce que**
une distance X définie par une longueur d'une ligne droite raccordant un centre du diamètre interne de l'extension (24) jusqu'à une extrémité sortie (23a) de la conduite d'injection (23) est déterminée de sorte à satisfaire à l'expression suivante sur la base d'un rayon de courbure r de la portion interne (27) du coude (25) :

$$2{,}5 \; \mathrm{x} \; \mathrm{r} \leq \mathrm{X} \leq 3{,}5 \; \mathrm{x} \; \mathrm{r},$$

et

l'extrémité sortie (23a) de la conduite d'injection (23) est disposée dans une région (ar2) à l'opposé d'une région (an), qui se situe au sein du corps de contenant (21) et inclut l'extension (24), par rapport à un deuxième plan de référence (rp2) incluant l'axe central (O) du corps de contenant (21) et substantiellement parallèle à l'extension (24).

2. Séparateur d'huile de la revendication 1, dans lequel une distance la plus courte (L1) entre l'extrémité sortie (23a) de la conduite d'injection (23) et de la paroi latérale (21a) du corps de contenant (21) est plus courte qu'une distance la plus courte (L2) entre la portion externe (26) du coude (25) et la paroi latérale (21a) du corps de contenant (21).

3. Séparateur d'huile de l'une quelconque des revendications 1 à 2, dans lequel
un rayon de courbure du coude (25) est plus petit que celui de la paroi latérale (21a) du corps du contenant (21).

4. Séparateur d'huile de l'une quelconque des revendications 1 à 3, dans lequel
la conduite d'injection (23) est courbée en outre vers le haut au sein du corps de contenant (21).

5. Séparateur d'huile de l'une quelconque des revendications 1 à 4, dans lequel
une face d'extrémité de l'extrémité sortie (23a) de la conduite d'injection (23) est inclinée vers un espace intérieur du corps de contenant (21).

FIG. 1

FIG. 2

FIG. 3

FIG. 4

FIG. 5

FIG. 6

**EP 3 144 608 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006280622 A1
- JP 2002061993 A
- JP 2005069654 A